# FASCICULE DE BREVET EUROPEEN

(11) **EP 3 218 219 B1**
(45) Date de publication et mention de la délivrance du brevet: **01.01.2020**
(21) Numéro de dépôt: 15798501.1
(22) Date de dépôt: 23.10.2015
(51) Int. Cl.: B60K 35/00, B60K 37/06, G06F 3/01

(54) **INTERFACE HOMME/MACHINE ET PROCÉDÉ DE CONTRÔLE DE FONCTIONS D'UN VÉHICULE PAR DÉTECTION DE MOUVEMENT ET/OU D'EXPRESSION DU CONDUCTEUR**
MENSCH-MASCHINE-SCHNITTSTELLE UND VERFAHREN ZUR STEUERUNG DER FUNKTIONEN EINES FAHRZEUGS DURCH DETEKTION VON BEWEGUNG UND/ODER AUSDRUCK DES FAHRERS
HUMAN MACHINE INTERFACE AND METHOD FOR CONTROLLING THE FUNCTIONS OF A VEHICLE BY DETECTION OF MOVEMENT AND/OR EXPRESSION OF THE DRIVER

(30) Priorité: 12.11.2014 FR 1460891
(43) Date de publication de la demande: 20.09.2017
(73) Titulaire: PSA Automobiles SA, 78300 Poissy (FR)
(72) Inventeur: ETCHEVERRY, Celine, F-91370 Verrieres le Buisson (FR); LAYERLE, Jean-francois, F-94320 Thiais (FR)
(74) Mandataire: Jeannin, Laurent Jean-Pierre
(86) Numéro de dépôt international: PCT/FR2015/052864
(87) Numéro de publication internationale: WO 2016/075381

(56) Documents cités:
- WO-A1-2013/053529
- DE-A1-102012 000 274
- DE-A1-102012 020 607
- KR-A- 20110 129 042
- US-A1- 2010 125 816
- US-A1- 2013 261 871

## Description

L'invention concerne les véhicules, éventuellement de type automobile, et plus précisément les interfaces homme/machine qui sont destinées à contrôler des fonctions assurées par des équipements de véhicules.

Aujourd'hui, la plupart des interfaces homme/machine qui permettent à un usager d'un véhicule de contrôler des fonctions d'équipement(s) comprennent des organes de commande, tels que des boutons (éventuellement de type « touch-latch »), des molettes, des réglettes, des touches sensitives, des touches à détecteur de présence, et des zones tactiles d'écrans. Pour que de tels organes de commande puissent déclencher l'activation ou la désactivation d'une fonction, il faut qu'un doigt ou une main d'un usager interagisse avec eux. Or, lorsque l'usager est le conducteur du véhicule, une telle interaction peut s'avérer dangereuse du fait qu'elle détourne son attention vers l'organe de commande. Ce danger est encore accru lorsque le conducteur doit tout d'abord rechercher parmi de nombreux organes de commande celui avec lequel il doit interagir et/ou lorsque l'activation d'une fonction nécessite plusieurs interactions (par exemple lors de la sélection d'une option dans un menu ou un sous-menu affiché sur un écran tactile).

Par ailleurs, lorsqu'un véhicule est équipé d'une interface homme/machine à organes de commande, il est généralement très difficile, voire impossible, de rajouter à cette interface homme/machine un autre organe de commande pour contrôler une nouvelle fonction d'un équipement ajouté postérieurement à sa fabrication.

Il a certes été proposé de contrôler quelques fonctions d'un véhicule avec des commandes vocales consistant en des mots préalablement enregistrés par un usager et associés respectivement à ces fonctions. Mais dans certains environnements bruités, les moyens d'analyse de sons, qui sont chargés de reconnaître les mots prononcés par un usager, peuvent ne pas réussir à reconnaître un mot prononcé par cet usager, ce qui empêche l'activation/désactivation d'une fonction et donc peut indisposer l'usager. Par ailleurs, lorsque l'usager qui prononce un mot associé à une fonction n'est pas celui qui a préalablement enregistré ce mot, les moyens d'analyse de sons ne peuvent pas reconnaître ce mot puisque le spectre sonore n'est pas sensiblement identique à celui de l'enregistrement initial. Par conséquent, seul le conducteur d'un véhicule peut utiliser les commandes vocales qu'il a préalablement enregistrées, ce qui s'avère pénalisant pour les autres conducteurs du véhicule.

On connait par le document US2013261871 un procédé qui comporte le maintien d'une corrélation entre une pluralité de gestes prédéterminés, en combinaison avec une pluralité de régions prédéterminées d'un véhicule, et une pluralité de fonctions.

On connait par le document DE102012020607 un procédé comprenant la génération d'une séquence d'images d'une main d'un utilisateur d'un dispositif électronique par une caméra, et la détection de position de la main sur la base sur la séquence

On connait par le document DE102012000274 un procédé de commande de fonctions dans un véhicule à l'aide de gestes effectués dans l'espace tridimensionnel.

On connait par le document WO201353529 concerne un système de commande d'un véhicule à moteur, pourvu d'un dispositif d'affichage destiné à représenter une surface de commande et d'une unité de commande comportant un capteur permettant de détecter rapprochement et la position d'au moins un doigt de l'utilisateur par rapport à l'unité de commande.

On connait par le document KR20110129042 un procédé par lequel un visage de l'utilisateur est capturée par la caméra d'un appareil portable sur la base d'une détection de visage en temps réel et un algorithme de reconnaissance de l'expression.

On connait par le document WO un dispositif pour WO2010059956 la détection d'un mouvement relatif ou d'une orientation relative entre un utilisateur et un dispositif de calcul, la détection pouvant être utilisée pour commander des aspects du dispositif.

L'invention a donc pour but d'améliorer la situation.

Elle propose notamment à cet effet une interface homme/machine, destinée à contrôler des fonctions assurées par au moins un équipement d'un véhicule, et comprenant :
- des moyens d'analyse agencés pour analyser des données d'images représentatives d'une partie d'un conducteur du véhicule pour détecter au moins un mouvement de tête de ce conducteur et/ou une expression du visage de ce conducteur,
- des moyens de comparaison agencés pour comparer le mouvement détecté et/ou l'expression détectée à des données qui sont représentatives de mouvement(s) prédéfini(s) de tête et/ou d'expression(s) prédéfinie(s) du visage et stockées en correspondance des fonctions, et
- des moyens de contrôle agencés, en cas de comparaison réussie avec un mouvement prédéfini et/ou une expression prédéfinie, pour déclencher une activation d'une fonction correspondante.

Ainsi, n'importe quel conducteur peut, s'il connaît les mouvements prédéfinis de parties du corps et/ou les expressions prédéfinies du visage, contrôler des fonctions d'un véhicule. En outre, le détournement de l'attention du conducteur est minimisé.

L'interface homme/machine selon l'invention comporte en outre
- dans un premier mode réalisation, ses moyens de contrôle peuvent être agencés, en cas de comparaison réussie avec un mouvement prédéfini et/ou une expression prédéfinie, pour déclencher l'affichage sur un écran du véhicule et/ou la diffusion par au moins un haut-parleur du véhicule d'un message désignant la fonction correspondante à activer, et pour déclencher l'activation de cette fonction correspondante consécutivement à une nouvelle comparaison réussie par les moyens de comparaison entre un nouveau mouvement détecté et/ou une nouvelle expression détectée et un mouvement prédéfini et/ou une expression prédéfinie dont les données sont stockées en correspondance d'une fonction d'approbation. L'interface homme/machine selon l'invention peut comporter d'autres caractéristiques qui peuvent être prises séparément ou en combinaison, et notamment :
   - chaque mouvement peut être choisi parmi (au moins) une rotation de la tête vers le haut, une rotation de la tête vers le bas, une rotation de la tête vers la droite, une rotation de la tête vers la gauche, une rotation de la tête vers le haut et la droite, une rotation de la tête vers le haut et la gauche, une rotation de la tête vers le bas et la droite, une rotation de la tête vers le bas et la gauche, au moins un clignement des yeux pendant une durée supérieure à un seuil prédéfini, un déplacement des yeux vers le haut, un déplacement des yeux vers le bas, un déplacement des yeux vers la droite, un déplacement des yeux vers la gauche, un déplacement des yeux vers le haut et la droite, un déplacement des yeux vers le haut et la gauche, un déplacement des yeux vers le bas et la droite, un déplacement des yeux vers le bas et la gauche, un mouvement de sourcil, au moins un mouvement des lèvres, un geste effectué avec un bras, un signe effectué avec une main, et un signe effectué avec une main en pointant une direction ;
   - elle peut comprendre des moyens d'apprentissage agencés pour enregistrer des données représentatives d'un mouvement particulier et/ou d'une expression particulière, détecté(e)(s) par les moyens d'analyse dans des données d'images, en correspondance d'une fonction sélectionnée à la requête d'un usager du véhicule ;
   - elle peut comprendre des moyens d'acquisition installés dans un habitacle du véhicule, orientés vers le conducteur et agencés pour acquérir des images d'une partie du conducteur définies par des données numériques.

L'invention propose également un véhicule, éventuellement de type automobile, et comprenant au moins un équipement assurant au moins une fonction et une interface homme/machine du type de celle présentée ci-avant.

L'invention propose également un procédé, destiné à permettre le contrôle de fonctions assurées par au moins un équipement d'un véhicule, et comprenant :
- une étape dans laquelle on analyse des données d'images représentatives d'une partie d'un conducteur du véhicule pour détecter au moins un mouvement d'une partie du corps de ce conducteur et/ou une expression du visage de ce conducteur,
- une étape dans laquelle on compare le mouvement détecté et/ou l'expression détectée à des données qui sont représentatives de mouvement(s) prédéfini(s) de partie(s) du corps et/ou d'expression(s) prédéfinie(s) du visage et stockées en correspondance des fonctions, et
- une étape dans laquelle, en cas de comparaison réussie avec un mouvement prédéfini et/ou une expression prédéfinie, on active une fonction correspondante.

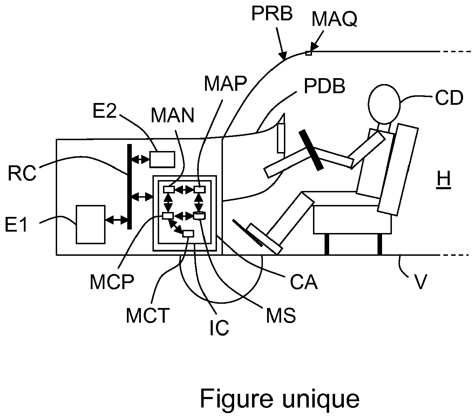

D'autres caractéristiques et avantages de l'invention apparaîtront à l'examen de la description détaillée ci-après, et du dessin annexé, sur lequel l'unique figure illustre schématiquement et fonctionnellement une partie d'un exemple de véhicule automobile comprenant plusieurs équipements dont un calculateur comprenant un exemple de réalisation d'une interface homme/machine selon l'invention.

L'invention a notamment pour but de proposer une interface homme/ machine IC, et un procédé de contrôle associé, destinés à contrôler des fonctions assurées par au moins un équipement électronique Ei d'un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule piloté par un conducteur et comportant au moins un équipement électronique assurant une fonction contrôlable (au moins partiellement) par ce conducteur. Par conséquent, elle concerne non seulement les véhicules terrestres, mais également les véhicules maritimes (ou fluviaux) et les aéronefs.

On a schématiquement et fonctionnellement représenté sur l'unique figure une partie d'un véhicule automobile de type voiture V comprenant plusieurs équipements électroniques Ei et une interface homme/machine IC selon l'invention.

Chaque équipement (électronique) Ei assure au moins une fonction qui est au moins partiellement contrôlable par le conducteur CD via l'interface homme/machine IC. Par exemple, les équipements E1 et E2 (i = 1 ou 2) sont respectivement une installation de chauffage/climatisation et un dispositif de guidage par satellites. Mais il pourrait s'agir de n'importe quel autre équipement embarqué dans un véhicule et pouvant être contrôlé par le conducteur, et notamment le système d'éclairage extérieur ou intérieur, l'avertisseur sonore, l'indicateur de changement de direction, l'ordinateur de bord, le système audio, et les équipements assurant au moins une fonction d'aide à la conduite.

Comme illustré sur l'unique figure, les équipements Ei peuvent être connectés à un réseau de communication (ou réseau de bord) RC, éventuellement de type multiplexé, et qui permet l'échange d'informations. Ces informations peuvent être, par exemple, des commandes (ou instructions), des fichiers de données, des valeurs de paramètres ou d'états mesurées ou estimées et des résultats de calculs.

Egalement comme illustré sur l'unique figure, une interface homme/ machine IC, selon l'invention, comprend au moins des moyens d'analyse MAN, des moyens de comparaison MCP et des moyens de contrôle MCT.

On notera que dans l'exemple de réalisation non limitatif illustré sur l'unique figure, l'interface homme/machine IC fait partie d'un calculateur CA, éventuellement dédié. Mais cela n'est pas obligatoire. En effet, l'interface homme/machine IC pourrait être un équipement électronique connecté au réseau de communication RC et se présentant éventuellement sous la forme d'un calculateur. Par conséquent, l'interface homme/machine IC peut être réalisée sous la forme de modules logiciels (ou informatiques ou encore « software »), ou bien d'une combinaison de circuits électroniques (ou « hardware ») et de modules logiciels.

Les moyens d'analyse MAN sont agencés pour analyser des données d'images qui sont représentatives d'une partie du conducteur CD du véhicule V pour détecter au moins un mouvement d'une partie du corps de ce conducteur CD et/ou une expression du visage de ce conducteur CD.

Il est rappelé que l'on entend ici par « corps » l'intégralité du corps d'une personne, et notamment la tête, le tronc et les membres supérieurs (bras et mains).

On comprendra que selon la configuration des moyens d'analyse MAN, ces derniers (MAN) peuvent détecter soit au moins un mouvement d'une partie du corps du conducteur CD, soit au moins une expression du visage du conducteur CD, soit encore au moins un mouvement d'une partie du corps du conducteur CD et au moins une expression du visage du conducteur CD.

Les données d'images qui sont représentatives d'une partie du conducteur CD sont acquises par des moyens d'acquisition MAQ installés dans l'habitacle H. Elles peuvent être de type bidimensionnel (ou 2D) ou tridimensionnel (ou 3D), et représentatives du visage du conducteur CD ainsi qu'éventuellement du thorax et de l'un au moins des bras du conducteur CD.

Par exemple, les moyens d'acquisition MAQ peuvent être installés au moins partiellement sur la face intérieure du parebrise PRB du véhicule V (au voisinage du toit ou pavillon), comme illustré non limitativement sur l'unique figure, ou bien au moins partiellement dans le rétroviseur intérieur. Ils peuvent comprendre au moins une caméra numérique orientée vers le conducteur CD, en particulier vers sa tête et son thorax. On notera que ces moyens d'acquisition MAQ peuvent soit faire partie du dispositif DC, soit faire partie d'un autre système embarqué dans le véhicule V, comme par exemple un système de détection d'hypovigilance. Dans ce dernier cas, l'interface homme/machine IC peut, par exemple, récupérer les images acquises par les moyens d'acquisition MAQ (et éventuellement prétraitées) via le réseau de communication RC.

Les moyens d'analyse MAN peuvent détecter chaque mouvement et/ou chaque expression par toute technique connue de l'homme de l'art, et notamment par reconnaissance de forme et/ou poursuite en temps réel. A titre d'exemple, une analyse des expressions et mouvements du visage peut se faire au moyen d'algorithme(s) basé(s) sur des modèles déformables de type ASM (« Active Shape Model ») ou AAM (« Active Appearence Model »).

De très nombreux mouvements peuvent être détectés par les moyens d'analyse MAN, et notamment :
- une rotation de la tête vers le haut,
- une rotation de la tête vers le bas,
- une rotation de la tête vers la droite,
- une rotation de la tête vers la gauche,
- une rotation de la tête vers le haut et la droite,
- une rotation de la tête vers le haut et la gauche,
- une rotation de la tête vers le bas et la droite,
- une rotation de la tête vers le bas et la gauche,
- au moins un clignement des yeux pendant une durée supérieure à un seuil prédéfini,
- un déplacement des yeux vers le haut,
- un déplacement des yeux vers le bas,
- un déplacement des yeux vers la droite,
- un déplacement des yeux vers la gauche,
- un déplacement des yeux vers le haut et la droite,
- un déplacement des yeux vers le haut et la gauche,
- un déplacement des yeux vers le bas et la droite,
- un déplacement des yeux vers le bas et la gauche,
- un mouvement de sourcil,
- au moins un mouvement des lèvres,
- un geste effectué avec un bras,
- un signe effectué avec une main, et
- un signe effectué avec une main en pointant une direction.

On notera que les moyens d'analyse MAN peuvent être également et éventuellement agencés pour détecter la direction d'observation des yeux. Cela nécessite une détermination de la position de la tête dans l'habitacle H et de l'origine du vecteur regard dans ce dernier (H).

Par ailleurs, de nombreuses expressions du visage peuvent être détectées par les moyens d'analyse MAN, et notamment un sourire, une grimace, un froncement des sourcils, une marque d'étonnement et une bouche ouverte.

A titre d'exemple, on peut localiser en temps réel des points caractéristiques du visage, tels que les coins ou les contours des yeux, le nez et les contours de la bouche. Dans ce cas, les variations des positions de ces points par rapport aux positions qu'ils possèdent dans un visage sans expression particulière (ou « neutre ») permettent d'estimer une expression du visage.

Les moyens de comparaison MCP sont agencés pour comparer le mouvement détecté et/ou l'expression détectée par les moyens d'analyse MAN à des données qui sont représentatives de mouvement(s) prédéfini(s) de partie(s) du corps et/ou d'expression(s) prédéfinie(s) du visage et qui sont stockées en correspondance des fonctions contrôlables du véhicule V.

Comme illustré non limitativement sur l'unique figure, les données représentatives de mouvements prédéfinis et/ou d'expressions prédéfinies peuvent être stockées dans des moyens de stockage MS de l'interface homme/machine IC. Ces moyens de stockage MS peuvent, par exemple, se présenter sous la forme d'une mémoire, éventuellement de type logiciel. Ces données ont été préalablement enregistrées dans un laboratoire de tests ou en usine, ou, pour certaines d'entre elles, dans le véhicule V lors d'une phase d'apprentissage, à la demande du conducteur CD comme on le verra plus loin.

Les moyens de contrôle MCT sont agencés, en cas de comparaison réussie par les moyens de comparaison MCP entre un mouvement détecté et/ou une expression détectée et un mouvement prédéfini et/ou une expression prédéfinie, pour déclencher une activation de la fonction qui correspond à ce mouvement prédéfini et/ou cette expression prédéfinie.

Ce déclenchement peut se faire, par exemple, par transmission d'une requête à l'équipement Ei offrant la fonction concernée ou bien à un autre équipement qui est en charge du contrôle de cet équipement Ei offrant la fonction concernée.

Ainsi, n'importe quel conducteur du véhicule V peut contrôler une fonction de ce véhicule V en effectuant un mouvement prédéfini et/ou en prenant une expression de visage prédéfinie associé(s) à cette fonction, même si ce n'est pas lui qui a défini cette association. Cela permet avantageusement de minimiser le détournement d'attention que représente ce contrôle pour le conducteur. De plus, cela permet de réduire le nombre d'organes de commande dans l'habitacle H du véhicule V, lesquels sont encombrants, souvent peu esthétiques, parfois fragiles, sujets à des dysfonctionnements ou des pannes, et nécessitent des raccordements filaires.

Il est important de noter que lorsqu'une fonction a déjà été activée, c'est la désactivation que l'on déclenche au moyen d'un mouvement et/ou d'une expression. Par ailleurs, le mouvement et/ou l'expression qui est (sont) utilisé(s) pour déclencher l'activation d'une fonction n'est (ne sont) pas obligatoirement le même que celui (les mêmes que ceux) qui est (sont) utilisé(s) pour déclencher la désactivation de cette même fonction.

Dans un mode de réalisation optionnel, les moyens de contrôle MCT peuvent être agencés, en cas de comparaison réussie avec un mouvement prédéfini et/ou une expression prédéfinie, pour déclencher l'affichage sur un écran du véhicule V (éventuellement celui du combiné central implanté dans la planche de bord PDB) et/ou la diffusion par au moins un haut-parleur du véhicule V d'un message désignant la fonction correspondante à activer. Dans ce cas, les moyens de contrôle MCT déclenchent l'activation de cette fonction correspondante consécutivement à une nouvelle comparaison réussie par les moyens de comparaison MCP entre un nouveau mouvement détecté et/ou une nouvelle expression détectée et un mouvement prédéfini et/ou une expression prédéfinie dont les données qui le(s) définisse(nt) sont stockées dans les moyens de stockage MS en correspondance d'une fonction d'approbation.

On comprendra que cette option est destinée à indiquer au conducteur CD la fonction qui est associée au mouvement et/ou à l'expression de visage détecté(e)(s) par l'interface homme/machine IC, afin qu'il signale à cette dernière (IC) s'il elle ne s'est pas trompée en effectuant un nouveau mouvement prédéfini et/ou une nouvelle expression prédéfinie associée à une fonction d'approbation. Si le conducteur CD n'effectue pas ce nouveau mouvement prédéfini et/ou cette nouvelle expression prédéfinie, ou si ce qu'il fait n'est pas reconnu par l'interface homme/machine IC, alors l'activation de la fonction requise par le conducteur CD n'est pas déclenchée.

Dans une variante de réalisation de l'option décrite ci-dessus, les moyens de contrôle MCT sont toujours agencés, en cas de comparaison réussie avec un mouvement prédéfini et/ou une expression prédéfinie, pour déclencher l'affichage sur un écran du véhicule V (éventuellement celui du combiné central implanté dans la planche de bord PDB) et/ou la diffusion par au moins un haut-parleur du véhicule V d'un message désignant la fonction correspondante à activer. Mais ils déclenchent l'activation de cette fonction correspondante consécutivement à une détection d'une interaction entre une main du conducteur CD et un organe de commande qui est installé dans le véhicule V. Cet organe de commande est de préférence dédié à l'approbation du contenu du message. Mais cela n'est pas obligatoire.

On comprendra que cette variante est destinée à indiquer au conducteur CD la fonction qui est associée au mouvement et/ou à l'expression de visage détecté(e)(s) par l'interface homme/machine IC, afin qu'il signale à cette dernière (IC) si elle ne s'est pas trompée en interagissant avec un organe de commande. Si le conducteur CD n'effectue pas cette interaction, alors l'activation de la fonction requise par le conducteur CD n'est pas déclenchée.

A titre d'exemple purement illustratif, on peut envisager que l'activation du clignotant gauche (ou droit) soit déclenchée en cas de détection d'une observation du conducteur CD dans la direction du rétroviseur gauche (ou droit), puis par un appui sur un organe de commande dédié à l'approbation (ou validation) ou par un clignement volontaire des yeux (pendant une durée de fermeture supérieure à celle d'un clignement d'hydratation des yeux) ou encore par la prononciation (même sans bruit) d'un mot spécifique d'approbation (ou de validation) identifié par une reconnaissance labiale.

Egalement à titre d'exemple purement illustratif, on peut envisager que l'activation d'une fonction consiste en une prise de connaissance d'un message affiché sur un écran pour informer le conducteur CD d'un niveau de carburant faible, d'un ouvrant mal fermé, ou d'une perte de puissance. Dans ce cas, la détection d'une orientation de la tête du conducteur CD vers cet écran suivie de la détection d'un clignement volontaire des yeux (pendant une durée de fermeture supérieure à celle d'un clignement d'hydratation des yeux) ou d'un mot spécifique d'approbation (ou de validation) identifié par une reconnaissance labiale, peut, par exemple servir à indiquer cette prise de connaissance.

Egalement à titre d'exemple purement illustratif, la sélection d'une option dans un menu affiché sur un écran peut être réalisée par une orientation de la tête du conducteur CD vers cet écran suivie de petits mouvements de la tête (haut/bas et/ou gauche/droite) dans cette orientation pour naviguer dans ce menu. Dans ce cas, la validation de l'option sélectionnée peut, par exemple, se faire par un appui sur un organe de commande dédié à l'approbation (ou validation) ou par un clignement volontaire des yeux (pendant une durée de fermeture supérieure à celle d'un clignement d'hydratation des yeux) ou encore par la prononciation (même sans bruit) d'un mot spécifique d'approbation (ou de validation) identifié par une reconnaissance labiale.

Egalement dans un mode de réalisation optionnel, l'interface homme/ machine IC peut éventuellement comprendre des moyens d'apprentissage MAP agencés pour enregistrer des données qui sont représentatives d'un mouvement particulier et/ou d'une expression particulière, détecté(e)(s) par les moyens d'analyse MAN dans des données d'images, en correspondance d'une fonction sélectionnée à la requête d'un usager du véhicule V.

On comprendra que ces moyens d'apprentissage MAP sont destinés à permettre à un usager (préférentiellement le conducteur CD) de définir lui-même un mouvement et/ou une expression spécifique(s) qu'il souhaite faire pour déclencher l'activation d'une fonction choisie. Le conducteur CD dispose alors d'une possibilité de personnalisation de mouvements et/ou d'expressions pour que ces derniers viennent s'ajouter aux mouvements et/ou expressions prédéfini(e)s par défaut par le constructeur du véhicule V.

Les données d'apprentissage qui définissent ce mouvement et/ou cette expression spécifique(s) sont alors stockées par les moyens d'apprentissage MAP dans les moyens de stockage MS. On notera que des données d'apprentissage et des données « d'usine » peuvent être associées à une même fonction alors même qu'elles définissent des mouvements et/ou expressions différent(e)s. Mais on interdit la possibilité que des données d'apprentissage et des données « d'usine » définissant des mouvements et/ou expressions identiques soient associées à des fonctions différentes.

Cette option d'apprentissage peut être également utilisée pour modifier un mouvement prédéfini d'usine et/ou une expression prédéfinie d'usine associé(e)(s) à une fonction, afin de les adapter précisément à un mouvement et/ou une expression que le conducteur CD à l'habitude de faire spontanément lorsqu'il veut activer cette fonction.

Cette option d'apprentissage peut être également utilisée pour permettre le contrôle de nouvelles fonctions offertes par des équipements qui sont ajoutés au véhicule V après sa fabrication, ce qui est généralement difficile, voire impossible, lorsque l'interface homme/machine est constituée d'organes de commande. On notera que dans cette optique d'ajout d'équipements il est également envisageable d'ajouter aux données stockées dans les moyens de stockage MS de nouvelles données d'usine définissant de nouvelles associations (fonction-mouvement prédéfini et/ou expression prédéfinie).

Il est également important de noter que l'invention peut être considérée sous l'angle d'un procédé de contrôle, pouvant être notamment mis en œuvre au moyen d'une interface homme/machine IC du type de celle présentée ci-avant. Les fonctionnalités offertes par la mise en œuvre du procédé selon l'invention étant identiques à celles offertes par l'interface homme/machine IC présentée ci-avant, seule la combinaison de fonctionnalités principales offerte par le procédé est présentée ci-après.

Ce procédé de contrôle comprend en outre :
- une étape dans laquelle on analyse des données d'images représentatives d'une partie d'un conducteur CD d'un véhicule V pour détecter au moins un mouvement d'une partie du corps de ce conducteur CD et/ou une expression du visage de ce conducteur CD,
- une étape dans laquelle on compare le mouvement détecté et/ou l'expression détectée à des données qui sont représentatives de mouvement(s) prédéfini(s) de partie(s) du corps et/ou d'expression(s) prédéfinie(s) du visage et stockées en correspondance de fonctions contrôlables du véhicule V, et
- une étape dans laquelle, en cas de comparaison réussie avec un mouvement prédéfini et/ou une expression prédéfinie, on active la fonction correspondante.

## Revendications

1. Interface homme/machine (IC) pour contrôler des fonctions assurées par au moins un équipement (Ei) d'un véhicule (V), comprenant des moyens d'analyse (MAN) agencés pour analyser des données d'images représentatives d'une partie d'un conducteur dudit véhicule (V) pour détecter au moins un mouvement de tête dudit conducteur et/ou une expression du visage dudit conducteur, des moyens de comparaison (MCP) agencés pour comparer ledit mouvement détecté et/ou ladite expression détectée à des données représentatives de mouvement(s) prédéfini(s) de tête et/ou d'expression(s) prédéfinie(s) du visage et stockées en correspondance desdites fonctions, et des moyens de contrôle (MCT) agencés, en cas de comparaison réussie avec un mouvement prédéfini et/ou une expression prédéfinie, pour déclencher une activation d'une fonction correspondante **caractérisée en ce que** lesdits moyens de contrôle (MCT) sont agencés, en cas de comparaison réussie avec un mouvement prédéfini et/ou une expression prédéfinie, pour déclencher l'affichage sur un écran dudit véhicule (V) et/ou la diffusion par au moins un haut-parleur dudit véhicule (V) d'un message désignant ladite fonction correspondante à activer, **caractérisée en ce que**, lesdits moyens de contrôle (MCT) sont en outre agencés pour déclencher ladite activation de cette fonction correspondante : consécutivement à une nouvelle comparaison réussie par lesdits moyens de comparaison (MCP) entre un nouveau mouvement détecté et/ou une nouvelle expression détectée et un mouvement prédéfini et/ou une expression prédéfinie dont les données sont stockées en correspondance d'une fonction d'approbation.

2. Interface homme/machine selon la revendication 1, **caractérisée en ce que** chaque mouvement est choisi dans un groupe comprenant une rotation de la tête vers le haut, une rotation de la tête vers le bas, une rotation de la tête vers la droite, une rotation de la tête vers la gauche, une rotation de la tête vers le haut et la droite, une rotation de la tête vers le haut et la gauche, une rotation de la tête vers le bas et la droite, une rotation de la tête vers le bas et la gauche, au moins un clignement des yeux pendant une durée supérieure à un seuil prédéfini, un déplacement des yeux vers le haut, un déplacement des yeux vers le bas, un déplacement des yeux vers la droite, un déplacement des yeux vers la gauche, un déplacement des yeux vers le haut et la droite, un déplacement des yeux vers le haut et la gauche, un déplacement des yeux vers le bas et la droite, un déplacement des yeux vers le bas et la gauche, un mouvement de sourcil, au moins un mouvement des lèvres.

3. Interface homme/machine selon l'une des revendications 1 ou 2, **caractérisée en ce qu'**elle comprend des moyens d'apprentissage (MAP) agencés pour enregistrer des données représentatives d'un mouvement particulier et/ou d'une expression particulière, détecté(e)(s) par lesdits moyens d'analyse (MAN) dans des données d'images, en correspondance d'une fonction sélectionnée à la requête d'un usager dudit véhicule (V).

4. Interface homme/machine selon l'une des revendications 1 à 3, **caractérisée en ce qu'**elle comprend des moyens d'acquisition (MAQ) installés dans un habitacle (H) dudit véhicule (V), orientés vers ledit conducteur et agencés pour acquérir des images d'une partie dudit conducteur définies par des données numériques.

5. Véhicule (V) comprenant au moins un équipement (Ei) assurant au moins une fonction, **caractérisé en ce qu'**il comprend en outre une interface homme/machine (IC) selon l'une des revendications précédentes.

6. Véhicule selon la revendication 5, **caractérisé en ce qu'**il est de type automobile.

7. Procédé de contrôle de fonctions assurées par au moins un équipement (Ei) d'un véhicule comprenant un interface homme/machine (IC) selon la revendication 1, **caractérisé en ce qu'**il comprend une étape dans laquelle on analyse des données d'images représentatives d'une partie d'un conducteur dudit véhicule (V) pour détecter au moins un mouvement de tête dudit conducteur et/ou une expression du visage dudit conducteur, une étape dans laquelle on compare ledit mouvement détecté et/ou ladite expression détectée à des données représentatives de mouvement(s) prédéfini(s) de partie(s) du corps et/ou d'expression(s) prédéfinie(s) du visage et stockées en correspondance desdites fonctions, et une étape dans laquelle, en cas de comparaison réussie avec un mouvement prédéfini et/ou une expression prédéfinie, on active une fonction correspondante.

## Patentansprüche

1. Mensch-Maschine-Schnittstelle (IC) zum Steuern der Funktionen, die von mindestens einer Ausstattung (Ei) eines Fahrzeugs (V) sichergestellt werden, die Analysemittel (MAN) umfasst, die eingerichtet sind, um Bilddaten, die für einen Teil eines Fahrers des Fahrzeugs (V) repräsentativ sind, zu analysieren, um mindestens eine Kopfbewegung des Fahrers und/oder einen Ausdruck des Gesichts des Fahrers zu erfassen, Vergleichsmittel (MCP), die eingerichtet sind, um die erfasste Bewegung und/oder den erfassten Ausdruck mit Daten zu vergleichen, die für vordefinierte Kopfbewegung(en) und/oder einen oder mehrere vordefinierte(n) Ausdruck (Ausdrücke) des Gesichts repräsentativ sind, und die in Entsprechung mit den Funktionen gespeichert sind, und Steuermittel (MCT), um im Fall eines erfolgreichen Vergleichs mit einer vordefinierten Bewegung und/oder einem vordefinierten Ausdruck eine Aktivierung einer entsprechenden Funktion auszulösen, **dadurch gekennzeichnet, dass** die Steuermittel (MCT) eingerichtet sind, um im Fall eines erfolgreichen Vergleichs mit einer vordefinierten Bewegung und/oder einem vordefinierten Ausdruck die Anzeige auf einem Bildschirm des Fahrzeugs (V) und/oder die Ausgabe durch mindestens einen Lautsprecher des Fahrzeugs (V) einer Meldung auszulösen, die die entsprechende zu aktivierende Funktion bezeichnet, **dadurch gekennzeichnet, dass** die Steuermittel (MCT) außerdem eingerichtet sind, um die Aktivierung dieser entsprechenden Funktion auszulösen: im Anschluss an einen neuen erfolgreichen Vergleich durch die Vergleichsmittel (MCP) zwischen einer neuen erfassten Bewegung und/oder einem neuen erfassten Ausdruck und einer vordefinierten Bewegung und/oder einem vordefinierten Ausdruck, deren Daten in Entsprechung mit einer Genehmigungsfunktion gespeichert sind.

2. Mensch-Maschine-Schnittstelle nach Anspruch 1, **dadurch gekennzeichnet, dass** jede Bewegung aus einer Gruppe ausgewählt wird, die eine Drehung des Kopfs nach oben, eine Drehung des Kopfs nach unten, eine Drehung des Kopfs nach rechts, eine Drehung des Kopfs nach links, eine Drehung des Kopfs nach oben und nach rechts, eine Drehung des Kopfs nach oben und nach links, eine Drehung des Kopfs nach unten und nach rechts, eine Drehung des Kopfs nach unten und nach links, mindestens ein Blinken der Augen während einer Dauer, die größer ist als ein vorbestimmter Schwellenwert, eine Verlagerung der Augen nach oben, eine Verlagerung der Augen nach unten, eine Verlagerung der Augen nach rechts, eine Verlagerung der Augen nach links, eine Verlagerung der Augen nach oben und nach rechts, eine Verlagerung der Augen nach oben und nach links, eine Verlagerung der Augen nach unten und nach rechts, eine Verlagerung der Augen nach unten und nach links, eine Augenbrauenbewegung, mindestens eine Bewegung der Lippen umfasst.

3. Mensch-Maschine-Schnittstelle nach einem der Ansprüche 1 oder 2, **dadurch gekennzeichnet, dass** sie Lernmittel (MAP) umfasst, die eingerichtet sind, um Daten aufzuzeichnen, die für eine besondere Bewegung und/oder einen besonderen Ausdruck, der (die) von den Analysemitteln (MAN) in den Bilddaten erfasst wird (werden) in Entsprechung mit einer Funktion, die auf die Anfrage eines Benutzers des Fahrzeugs (V) ausgewählt ist, repräsentativ sind.

4. Mensch-Maschine-Schnittstelle nach einem der Ansprüche 1 bis 3, **dadurch gekennzeichnet, dass** sie Erfassungsmittel (MAQ) umfasst, die in einem Innenraum (H) des Fahrzeugs (V) installiert sind, die zu dem Fahrer gerichtet und eingerichtet sind, um Bilder eines Teils des Fahrers aufzunehmen, die durch digitale Daten definiert sind.

5. Fahrzeug (V), das mindestens eine Ausstattung (Ei) umfasst, die mindestens eine Funktion sicherstellt, **dadurch gekennzeichnet, dass** es außerdem eine Mensch-Maschine-Schnittstelle (IC) nach einem der vorstehenden Ansprüche umfasst.

6. Fahrzeug nach Anspruch 5, **dadurch gekennzeichnet, dass** es vom Typ Kraftfahrzeug ist.

7. Steuerverfahren von Funktionen, die von mindestens einer Ausstattung (Ei) eines Fahrzeugs sichergestellt werden, das eine Mensch-Maschine-Schnittstelle (IC) nach Anspruch 1 umfasst, **dadurch gekennzeichnet, dass** es einen Schritt umfasst, bei dem Bilddaten, die für einen Teil eines Fahrers des Fahrzeugs (V) repräsentativ sind, analysiert werden, um mindestens eine Kopfbewegung des Fahrers und/oder einen Ausdruck des Gesichts des Fahrers zu erfassen, einen Schritt, bei dem die erfasste Bewegung und/oder der erfasste Ausdruck mit Daten verglichen wird, die für vordefinierte Bewegung(en) eines Teils (von Teilen) des Körpers und/oder einen vordefinierten Ausdruck (vordefinierte Ausdrücke) des Gesichts repräsentativ sind und die in Entsprechung mit den Funktionen gespeichert sind, und einen Schritt, bei dem im Fall eines erfolgreichen Vergleichs mit einer vordefinierten Bewegung und/oder einem vordefinierten Ausdruck eine entsprechende Funktion aktiviert wird.

## Claims

1. A human/machine interface (IC) for controlling functions provided by at least one device (Ei) of a vehicle (V), including analysis means (MAN) arranged to analyse image data representative of a part of a driver of said vehicle (V) in order to detect at least one head movement of said driver and/or a facial expression of said driver, comparison means (MCP) arranged for comparing said detected movement and/or said detected expression with data representative of predefined head movement(s) and/or predefined facial expression(s) and stored in correspondence with said functions, and control means (MCT) arranged, in the case of successful comparison with a predefined movement and/or a predefined expression, to trigger an activation of a corresponding function, **characterized in that** said control means (MCT) are arranged, in the case of successful comparison with a predefined movement and/or a predefined expression, to trigger the display on a screen of said vehicle (V) and/or the broadcast by at least one speaker of said vehicle (V) of a message designating said corresponding function to be activated, **characterized in that** said control means (MCT) are, furthermore, arranged to trigger said activation of this corresponding function: consecutively to a new successful comparison by said comparison means (MCP) between a new detected movement and/or a new detected expression and a predefined movement and/or a predefined expression, the data of which are stored in correspondence with an authentication function.

2. The human/machine interface according to Claim 1, **characterized in that** each movement is selected from a group including an upward rotation of the head, a downward rotation of the head, a rotation of the head towards the right, a rotation of the head towards the left, a rotation of the head upwards and towards the right, a rotation of the head upwards and towards the left, a rotation of the head downwards and towards the right, a rotation of the head downwards and towards the left, at least one blinking of the eyes for a duration greater than a predefined threshold, an upward movement of the eyes, a downward movement of the eyes, a movement of the eyes towards the right, a movement of the eyes towards the left, a movement of the eyes upwards and towards the right, a movement of the eyes upwards and towards the left, a movement of the eyes downwards and towards the right, a movement of the eyes downwards and towards the left, an eyebrow movement, at least one movement of the lips.

3. The human/machine interface according to one of Claims 1 or 2, **characterized in that** it includes learning means (MAP) arranged to record data representative of a particular movement and/or of a particular expression, detected by said analysis means (MAN) in image data, in correspondence with a selected function at the request of a user of said vehicle (V).

4. The human/machine interface according to one of Claims 1 to 3, **characterized in that** it includes acquisition means (MAQ) installed in a passenger compartment (H) of said vehicle (V), oriented towards said driver and arranged for acquiring images of a part of said driver, defined by numerical data.

5. A vehicle (V) including at least one device (Ei) providing at least one function, **characterized in that** it furthermore includes a human/machine interface (IC) according to one of the preceding claims.

6. The vehicle according to Claim 5, **characterized in that** it is of the automobile type.

7. A method for controlling functions provided by at least one device (Ei) of a vehicle including a human/machine interface (IC) according to Claim 1, **characterized in that** it includes a step in which an analysis is carried out of the image data representative of a part of a driver of said vehicle (V) to detect at least one head movement of said driver and/or a facial expression of said driver, a step in which said detected movement and/or said detected expression is compared with data representative of predefined movement(s) of part(s) of the body and/or of predefined facial expression(s) and stored in correspondence with said functions, and a step in which, in the case of successful comparison with a predefined movement and/or a predefined expression, a corresponding function is activated.
